Europäisches Patentamt

European Patent Office

Office européen des brevets

(11) Publication number: **0 460 456 A1**

# EUROPEAN PATENT APPLICATION

(21) Application number: 91108305.3

(22) Date of filing: **23.05.91**

(51) Int. Cl.5: **C08L 69/00, C08L 55/02, C08L 25/12**

(30) Priority: **04.06.90 US 532715**

(43) Date of publication of application:
**11.12.91 Bulletin 91/50**

(84) Designated Contracting States:
**DE ES FR GB IT NL**

(71) Applicant: **GENERAL ELECTRIC COMPANY**
**1 River Road**
**Schenectady New York 12305(US)**

(72) Inventor: **Sheu, Hrong-Roang**
**4501 Whited Drive**
**Vienna, West Virginia 26105(US)**
Inventor: **Himelrick, Kenneth Gary**
**2405 McKinley Avenue**
**Parkersburg, West Virginia 26104(US)**

(74) Representative: **Catherine, Alain**
**General Electric France Service de Propriété**
**Industrielle 18 Rue Horace Vernet**
**F-92136 Issy-Les-Moulineaux Cedex(FR)**

(54) **Polycarbonate/graft ABS/SAN copolymer blends having improved impact strength.**

(57) Compositions having unusually high impact strength and excellent melt flow are described as being a blend of an ABS graft polymer made by grafting acrylonitrile and styrene onto a substrate of a rubbery diene polymer; a styrene-acrylonitrile copolymer; and a polycarbonate, preferably a bisphenol A polycarbonate. The components are present in specific weight ratios to produce a deliberate mismatch between the ratio of styrene to acrylonitrile in the ABS graft polymer and the ratio of styrene to acrylonitrile in the SAN copolymer.

## BACKGROUND OF THE INVENTION

### 1. Field of the Invention:

Thermoplastic compositions comprising a blend of polycarbonate, a graft acrylonitrile-butadiene-styrene (ABS) polymer and a rigid styrene-acrylonitrile copolymer.

### 2. Description of the Prior Art:

There are many references in the prior art to blends of polycarbonate and ABS, the first significant patent reference in this field being Grabowski, U.S. Patent 3,130,177. Various improvements on the original Grabowski patent have been developed in the past two decades, many of which have tended to focus on enhancing various physical properties of the blends through the use of additional components in the blend. Examples include flame-retardant additives, mold releases, impact modifiers, process aids and stabilisers. Other approaches are directed to using specific ranges of polycarbonate, ABS and SAN in the blends and further defining the morphology on the individual components. For example, in Margotte et al, U. S. Patent 3,988,389, the weld line strength of a polycarbonate/ABS blend is said to be improved by using a very specific graft ABS formulation having a narrowly defined graft ratio, rubber particle size, rubber content, etc.

## SUMMARY OF THE INVENTION

The present invention is based on the discovery that surprisingly high impact strength may be achieved by creating a mismatch between the ratio of styrene to acrylonitrile in the graft ABS polymer and the ratio of styrene to acrylonitrile in the SAN. This is contrary to the conventional wisdom which has believed that close matching of the styrene to acrylonitrile ratios was required in order to obtain compatibility between the ABS graft and the rigid SAN.

Underlying this discovery is the concept that a dual phase impact modification would have superior performance. To achieve this dual phase impact modification for a blend containing polycarbonate and a rigid SAN copolymer, the high rubber graft ABS should well dispersed in both the SAN and polycarbonate phases. The approach used was to adjust the styrene to acrylonitrile (S/AN) ratio of the grafted SAN in the high rubber graft to match the solubility parameter of the polycarbonate and to mismatch the S/AN ratio of the rigid SAN phase.

The unusually high impact strength, both room temperature and low temperature, obtainable by the use of the present invention may be attributed to the more uniform dispersion of the rubbery particles throughout the blend. Examination of microphotographs of the composition clearly shows a superior distribution of the rubber, particularly throughout the polycarbonate matrix, and smaller, more uniform, domains of SAN throughout the continuous polycarbonate phase.

Another unexpected characteristic of the present invention is that the high impact values are not obtained at the expense of melt flow. In general, as impact strength goes up, melt flow goes down; and vice versa. Poor melt flow has a significant negative effect on the quality of molded parts and on productivity because of the longer time required to fill the mold and limitations on the size of the part. Compositions made in accordance with the present invention have excellent melt flow properties.

The compositions of the present invention comprise: a ABS graft polymer made by grafting acrylonitrile and styrene onto a substrate of a rubbery diene polymer; a styrene-acrylonitrile copolymer; and a polycarbonate, preferably a bisphenol A polycarbonate. The components are present in specific weight ratios to produce a deliberate mismatch between the ratio of styrene to acrylonitrile in the ABS graft polymer and the ratio of styrene to acrylonitrile in the SAN copolymer.

ABS type polymers useful in the present invention have molecules which contain two or more polymeric parts of different compositions that are bonded chemically. The polymer is preferably prepared by polymerizing a conjugated diene, such as butadiene or a conjugated diene with a monomer copolymerizable therewith, such as styrene, to provide a polymeric backbone. After formation of the backbone, at least one grafting monomer, and preferably two, are polymerized in the presence of the prepolymerized backbone to obtain the graft polymer. These resins are prepared by methods well known in the art.

The backbone polymer, as mentioned, is preferably a conjugated diene polymer such as polybutadiene, polyisoprene, or a copolymer, such as butadiene-styrene, butadiene-acrylonitrile, or the like.

The specific conjugated diene monomers normally utilized in preparing the backbone of the graft polymer include butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, chloro and bromo substituted butadienes such as dichlorobutadiene, bromobutadiene, dibromobutadiene, mixtures thereof, and the like. A preferred conjugated diene is butadiene.

One monomer or group of monomers that may be polymerized in the presence of the prepolymerized backbone are monovinylaromatic hydrocarbons. The monovinylaromatic monomers utilized include styrene, para methylstyrene, α-methylstyrene, 3,5-diethylstyrene, 4-n-propylstyrene, α-methyl vinyltoluene, α-chlorostyrene, α-bromostyrene, dichlorostyrene, dibromostyrene, tetra-chlorostyrene, mixtures thereof, and the like. The preferred monovinylaromatic hydrocarbons used are styrene and/or α-methylstyrene.

A second group of monomers that may be polymerized in the presence of the prepolymerized backbone are ethylenically unsaturated nitriles such as acrylonitrile and substituted acrylonitrile, and/or acrylic acid esters, exemplified by alkyl (meth)acrylates, such as ethyl acrylate and methyl methacrylate.

Examples of such ethylenically unsaturated nitriles include acrylonitrile, ethacrylonitrile, methacrylonitrile, α-chloroarylonitrile, β-chloroacrylonitrile, α-bromoacrylonitrile, and β-bromoacrylonitrile. Examples of acrylic acid esters include methyl acrylate, methyl methacrylate, ethyl acrylate, butyl acrylate, propylacrylate, isopropyl acrylate and mixtures thereof. The preferred ethylenically unsaturated nitrile is acrylonitrile and the preferred acrylic acid esters are ethyl acrylate and methyl methacrylate.

In the preparation of the graft polymer, the conjugated diolefin polymer or copolymer exemplified by a 1,3-butadiene polymer or copolymer comprises 15-85% by weight of the total graft polymer composition and the average rubber particle size should be a minimum of 400 Å and preferably from 1000-10,000 Å. The monomers polymerized in the presence of the backbone, exemplified by styrene and acrylonitrile, comprise from about 15 to about 85% by weight of the total graft polymer composition. The ratio of styrene to acrylonitrile in the graft will range from 77/23 to 89/11.

The second group of grafting monomers, exemplified by acrylonitrile, ethyl acrylate or methyl methacrylate, of the graft polymer composition, preferably comprise from about 10% to about 40% by weight of the total graft copolymer composition. The monovinylaromatic hydrocarbon exemplified by styrene comprises from about 30 to about 70% by weight of the total graft polymer composition.

In preparing the graft polymer, a certain percentage of the polymerizing monomers that are grafted on the backbone may combine with each other directly and occur as free copolymer. However, high rubber content grafts (65-85 wt % rubber) may be made with very little "free" copolymer in the product. For example, if styrene is utilized as one of the grafting monomers and acrylonitrile as the second grafting monomer, a certain portion of the composition will copolymerize as free styrene-acrylonitrile copolymer. In the case where α-methylstyrene is substituted for the styrene in the composition used in preparing the graft polymer, a certain percentage of the composition may be an α-methylstryrene-acrylonitrile copolymer.

The second major component in the product of the present invention is a rigid thermoplastic, preferably a interpolymer of the two (or more) grafting monomers in the graft polymer. Preferably it is a copolymer of a monovinyl aromatic monomer and an ethylenically unsaturated nitrile, and more preferably a copolymer of styrene and acrylonitrile. Other copolymers, such as α-methylstyrene-acrylonitrile, may be added to the blend.

The third major componenet is an aromatic polycarbonate. Polycarbonates, in general, are a special class of polyesters derived from the reaction of carbonic acid derivatives with aromatic, aliphatic, or mixed diols. They may be produced by the reaction of phosgene with a diol in the presence of an appropriate hydrogen chloride receptor or by a melt transesterification reaction between the diol and a carbonate ester. Polycarbonate can be made from a wide variety of starting materials, however, the principal polycarbonate produced commercially is bisphenol A polycarbonate, a polycarbonate made by reacting bisphenol A with phosgene by condensation.

The polycarbonate may comprise any aromatic polycarbonate homopolymer or copolymer known in the art. Preferably, the polycarbonate polymer contains residues of aromatic diols containing aromatic groups such as phenylene, biphenylene, naphthalene, anthrylene and the like. Examples of dihydric phenols suitable for use in preparing the polycarbonate include the bis(-hydroxyphenyl) alkylidenes such as 2,2-bis-(4-hydroxyphenyl) propane, more commoly known as bisphenol-A; 2,4'-dihydroxydiphenylmethane; bis-(2-hydroxyphenyl) methane; 1,1-bis(4-hydroxyphenyl) ethane and other bisphenol-A type diols known in the art, as well as the corresponding aromatically substituted or aliphatically substituted dihydric phenols wherein the substitutuents may comprise halogen, alkyl, acyl, carboxylate ester, sulfonate ester and the like groups. Of the foregoing, polycarbonates comprising homopolymers or copolymers of bisphenol-A and halogenated bisphenol-A are preferred. Copolymers may include a bisphenol-A and an alkyl terephtalate (PBT-PET) or an organosiloxane to form a segmented polymeric structure. Additionally, the polycarbonate polymer may comprise a blend of two or more polycarbonate polymers or copolymers.

For a more complete discussion of the chemistry of polycarbonates, one may refer to Kirk-Othmer Encyclopedia of Chemical Technology, Third Edition (1982) Vol. 18, pp. 479-494. This article, by D. W. Fox, is incorporated by reference in its entirety.

## DETAILED DESCRIPTION OF THE PREFERRED EMBODIMENTS

### Example 1- Control

A three component blend was prepared with 64 pbw polycarbonate (LEXAN ® 105- General Electric Company); 20 pbw styrene/acrylonitrile copolymer containing 75 wt% stryrene and 25 wt% acrylonitrile; and 16 pbw of a high rubber graft ABS containing 50 wt% butadiene, 37.5 wt% styrene and 12.5 wt% acrylonitrile. This would be a typical recipe according to the heretofore recognized principle that the S to AN ratios in the graft and in the rigid should be very close in value. In this case the ratio of S to AN in the copolymer is 3.0 and the ratio of S to AN in the graft ABS is also 3.0.

The blend was compounded on a 34 mm. twin screw extruder with conventional additives for stabilization and lubrication. Test samples were injection molded at 550° F. stock temperature.

### Example 2

Example 1 was repeated but substituting a specially prepared high rubber graft ABS in which the ratio of S to AN was varied from 75/25 (the control) up to 100/0. The composition of the six different blends labelled A (the control) through F were all made up according to the basic recipe recited above and containing ABS graft materials with 50 wt.% rubber. These compositions are set forth in Table I below along with impact strength and melt viscosity data. The Izod impact strength was measured in accordance with Test ASTM D256A and the melt viscosity data generated using a Kayness capillary rheometer at 550° F.

### TABLE I

| Sample | A | B | C | D | E | F |
|---|---|---|---|---|---|---|
| S/AN Ratio in ABS Rubber Graft | 75/25 | 80/20 | 82/18 | 85/15 | 90/10 | 100/0 |
| Impact Notched Izod 1/8", 73° F. Ft.lbs/inch | 13.6 | 12.9 | 26.7 | 19.7 | 10.1 | 9.7 |
| Viscosity 550° F. | | | | | | |
| 500/sec | 2187 | 2059 | 2099 | 2197 | 2309 | 1777 |
| 1000/sec | 1591 | 1508 | 1508 | 1585 | 1596 | 1328 |

### Example 3

Additional samples were prepared using the following basic formulation (in parts by weight):

| | |
|---|---|
| Polycarbonate (LEXAN ® 105) | 64 |
| SAN Copolymer (75% Styrene/25% Acrylonitrile) | 18 |
| Graft ABS (S to AN ratio varied) | 18 |

The ratio of S to AN in the high rubber graft ABS was varied from 70/30 to 85/15. The composition of five different blends all made up according to the basic recipe above and containing graft ABS materials with 50 wt.% rubber, are set forth below in Table II along with impact strength and viscosity data (as measured in accordance with the previous examples):

4

## TABLE II

| Sample | G | H | I | J | K |
|---|---|---|---|---|---|
| S/AN Ratio in the ABS graft | 70/30 | 75/25 | 80/20 | 82/18 | 85/15 |
| Izod Impact (ft-lb/inch) | | | | | |
| 1/8" @ RT | 13.2 | 13.8 | 12.6 | 22.9 | 21.3 |
| 1/8" @ -20° F. | 10.4 | 11.1 | 10.5 | 11.3 | 16.3 |
| Viscosity 550° F.poise | | | | | |
| 500/sec | 2973 | 2768 | 2071 | 2315 | 2573 |
| 1000/sec | 2078 | 1931 | 1526 | 1645 | 1786 |

### Example 4 - Control (Sample L)

A three component blend was prepared using the following basic formulation (in parts by weight).

| | |
|---|---|
| Polycarbonate (Lexan• 145) | 50 |
| SAN Copolymer (72 wt.% Styrene/28 wt.% Acrylonitrile) | 34 |
| Graft ABS (50 wt.% butadiene, 35 wt.% Styrene, 15 wt.% Acrylonitrile) | 16 |

This would be a typical recipe according to the heretofore recognized principle that the S to AN ratios in the rubber graft and in the rigid should be very close. In this case the ratio of S to AN in the grafted SAN is 2.33 (35%/15%) and the ratio in the rigid SAN copolymer is 2.57 (72%/28%).

The blend was compounded on a 34 mm. twin screw extruder with conventional additives for stabilization and lubrication. Test samples were injection molded at 550° F stock temperature. Melt viscosity of the blends was measured using a Kayness capillary rheometer at 500° F.

### Example 5 (Samples M to P)

Example 4 was repeated but substituting a specially prepared ABS rubber graft in which the ratio of S to AN was varied from 70/30 (the control) to 85/15. The composition of five different blends all made up according to the basic recipe above and containing graft ABS materials with 50 wt.% rubber, are set forth below in Table III along with impact strength and melt viscosity data:

## TABLE III

| Sample | L | M | N | O | P |
|---|---|---|---|---|---|
| S/AN ratio in the ABS rubber graft | 70/30 | 75/25 | 80/20 | 82/18 | 85/15 |
| Izod Impact (ft-lb/in) 1/8" @ RT | 11.3 | 12.0 | 11.2 | 25.2 | 22.2 |
| Viscosity 500·F (poise) 500/s | 3994 | 3893 | 3714 | 3520 | 3516 |
| 1000/s | 2549 | 2522 | 2437 | 2299 | 2294 |

By way of summary, the present invention uses thermoplastic compositions comprising a blend of:

A) 10-80 pbw of an aromatic polycarbonate;

B) 2-80 pbw of a graft polymer formed by grafting B1) a monovinyl aromatic monomer, at least one additional monomer selected from the group consisting of B2) an ethylenically unsaturated nitrile, B3) an acrylic acid ester and B4) mixtures of monomers B2 and B3, onto B5) a diene rubber substrate; and

C) 10-80 pbw of a copolymer of C1) a monovinyl aromatic composition and C2) an ethylenically unsaturated nitrile; the ratio of B1 to (B2 + B3 + B4) being from 77/23 to 89/11, the wt% of (B1 + B2 + B3 + B4) in the graft polymer being 15 to 85, and the ratio of C1 to C2 (wt %) being from 50/50 to 89/11.

From the foregoing examples, it should be recognized that the dual phase impact modification provided by the present invention can greatly enhance the impact strength of polycarbonate and SAN containing blends without sacrificing melt flow.

The preceding examples are set forth to demonstrate specific embodiments of the invention and are not intended to limit the scope of the presently claimed compositions. Additional embodiments and advantages within the scope of the claimed invention will be apparent to one of ordinary skill in the art.

**Claims**

1. A thermoplastic composition comprising a blend of:

    A) 10-80 pbw of an aromatic polycarbonate;

    B) 2-80 pbw of a graft polymer formed by grafting B1) a monovinyl aromatic monomer, at least one additional monomer selected from the group consisting of B2) an ethylenically unsaturated nitrile, B3) an acrylic acid ester and B4) mixtures of monomers B2 and B3, onto B5) a diene rubber substrate; and

    C) 5-80 pbw of a copolymer of C1) a monovinyl aromatic composition and C2) an ethylenically unsaturated nitrile; the ratio of B1 to (B2 + B3 + B4) being from 77/23 to 89/11, the wt% of (B1 + B2 + B3 + B4) in the graft polymer being 15 to 85, and the ratio of C1 to C2 being from 50/50 to 89/11.

2. The composition defined in Claim 1 wherein said monovinyl aromatic monomer is styrene.

3. The composition defined in Claim 1 wherein said ethylenically unsaturated nitrile is acrylonitrile.

4. The composition defined in Claim 1 wherein said acrylic acid ester is ethyl acrylate.

5. The composition defined in Claim 1 wherein said acrylic acid ester is methyl methacrylate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 388 011   (BAYER)<br>* Claim 1; example 3 * | 1-3,5 | C 08 L 69/00<br>C 08 L 55/02<br>C 08 L 25/12 |
| X | US-A-4 172 103   (V. SERINI et al.)<br>* Claim 1; column 3, line 31 - column 5, line 11; examples 2h,10e * | 1-5 | |
| X | EP-A-0 096 301   (BAYER)<br>* Claim 1; page 6, line 8 - page 8, line 22; page 11, line 4 - page 14, line 27; example 8c * | 1-3 | |
| X | EP-A-0 183 167   (MITSUBISHI RAYON)<br>* Claim 1; comparative example 4 * | 1,3 | |
| X | US-A-4 526 926   (C.A. WEBER et al.)<br>* Claim 1; column 4, lines 25-56 * | 1-3 | |

TECHNICAL FIELDS
SEARCHED (Int. Cl.5)

C 08 L

The present search report has been drawn up for all claims

| Place of search | Date of completion of search | Examiner |
|---|---|---|
| The Hague | 30 September 91 | KRISCHE D.H.T. |